# EUROPÄISCHE PATENTSCHRIFT

(11) **EP 1 457 394 B1**
(45) Veröffentlichungstag und Bekanntmachung des Hinweises auf die Patenterteilung: **20.09.2006**
(21) Anmeldenummer: 03027217.3
(22) Anmeldetag: 28.11.2003
(51) Int. Cl.: B60R 21/34, B62D 25/12

(54) **Personenkraftwagen**
Motor vehicle
Véhicule automobile

(30) Priorität: 14.03.2003 DE 10311220
(43) Veröffentlichungstag der Anmeldung: 15.09.2004
(73) Patentinhaber: Benteler Automobiltechnik GmbH, 33104 Paderborn (DE)
(72) Erfinder: Holtschulte, Katja, 33161 Hövelhof (DE); Nolze, Hans-Patrick, 33129 Delbrück (DE); Antes, Dirk, 66265 Heusweiler (DE); Korinth, Hendrick, 33106 Paderborn (DE); Fischer, Jochem, 73760 Ostfildern (DE); Hilgenberg, Stefan, 33102 Paderborn (DE); Juarez-Perez, Ricardo, 33098 Paderborn (DE); Hoffmann, Jörg, 66636 Theley (DE); Rüther, Harald, 59939 Olsberg (DE)
(74) Vertreter: Griepenstroh, Jörg

(56) Entgegenhaltungen:
- DE-A1- 2 934 060
- DE-A1- 10 022 094
- DE-A1- 10 123 479
- DE-A1- 10 141 628
- DE-A1- 19 948 181
- DE-A1- 19 957 869
- DE-A1- 19 957 870
- US-B1- 6 375 251
- PATENT ABSTRACTS OF JAPAN Bd. 2000, Nr. 07, 29. September 2000 (2000-09-29) & JP 2000 108840 A (MAZDA MOTOR CORP), 18. April 2000 (2000-04-18)

## Beschreibung

Die Erfindung betrifft einen Personenkraftwagen mit gegenüber von oben und/oder von vorne durch einen Aufprall eines ungeschützten Verkehrsteilnehmers einwirkenden Kräften nachgiebig gestalteten Karosseriefrontteilen.

Karosseriestrukturen eines PKW-Vorderwagens sind unter dem Aspekt der passiven Sicherheit dahingehend ausgelegt, dass sie im Kollisionsfall mit einem motorisierten Verkehrsteilnehmer oder einem festen Hindernis einen großen Teil der Aufprallenergie durch Verformung aufnehmen, um auf diese Weise den verwindungssteif gestalteten Fahrgastraum zu schützen. Neben diesem primär auf den Insassenschutz bezogenen Aspekt der passiven Sicherheit spielt verstärkt die Sicherheit der ungeschützten, d.h. insbesondere der unmotorisierten Verkehrsteilnehmer, wie Fußgänger und Radfahrer, eine zunehmende Rolle. Insbesondere bei Fußgängerkollisionen treten hohe Beschleunigungen im Bereich des Kopfes, des Oberkörpers und auch im Beinbereich des Fußgängers auf. Passive Sicherheitsmaßnahmen kennzeichnen sich dadurch, dass bestimmte kollisionsgefährdete Karosseriefrontteile anprallweich gestaltet sind. D.h. Aufprallenergie wird durch die Karosseriefrontteile in. Verformungsenergie umgewandelt, um auf diese Weise die Verletzungsschwere eines ungeschützten Verkehrsteilnehmers zu minimieren. Die zu tolerierende maximale Belastung für den Kopf liegt bei HIC (Head Injury Criterion) 1.000, während des Aufschlags auf die Fronthaube. Für den Aufprall des Oberschenkels auf die vordere Haubenkante gelten maximale Belastungen von 500 N als resultierende Kraft und 300 Nm als Biegemoment. Nachteilig bei bekannten Karosseriestrukturen eines PKW-Vorderwagens ist die unbefriedigende Eigenschaft, Aufprallenergie zu absorbieren bzw. das unterschiedliche Nachgiebigkeitsverhalten einzelner Bauteile, insbesondere im Übergangsbereich zwischen Fronthaube und Kotflügel sowie das Erfordernis, nach einer Kollision eine material- und arbeitsintensive Reparatur durchführen zu lassen.

Im Stand der Technik sind unterschiedlichste Ansätze bekannt geworden, wie Energie bei einem Aufprall auf ein Karosserieteil absorbiert werden kann. In der DE 100 22 094 A1 wird ein Energie absorbierendes Karosseriebauteil vorgeschlagen, bei welchem zwischen einer äußeren Wandung und einer am Fahrzeugaufbau abgestützten inneren Wandung einer Fronthaube Kammern angeordnet sind, die bei einem Aufprall mit Gas aus einem Gasgenerator befüllt werden. Die Kammern sind auch längs der Fahrzeuglängsrichtung angeordnet.

In der DE 101 23 479 A1 wird vorgeschlagen, dass eine Fronthaube eine Deformationsstruktur aufweist, die mit geringem Spalt zur fahrzeugfesten Stützflächen ausgebildet ist. Die Deformationsstruktur wird von mehreren Deformationstöpfen gebildet, die im Wesentlichen senkrecht zum Oberblech der Fronthaube Energie aufnehmend deformierbar sind.

Mit der DE 101 41 628 A1 ist eine Beschlaganordnung für eine aufschwenkbare Klappe, insbesondere eine Motorhaube eines Kraftfahrzeugs bekannt geworden. Zur Erhöhung der passiven Sicherheit wird vorgeschlagen, dass der Beschlaganordnung ein Dämpferelement derart zugeordnet ist, dass nach Überwinden einer auf die Klappe in Klappschließrichtung wirkenden Grenzkraft die Klappe zufolge einer Verlagerung des Dämpfungselements ausweicht.

Ferner zählt durch die DE 199 57 870 A1 eine Scharnieranordnung für eine Fronthaube zum Stand der Technik, wobei die Scharnieranordnung mit einem Energieabsorptionselement zur gezielten Energieabsorption bei einem Fußgängeraufprall auf die Fronthaube ausgestattet ist. Das Energieabsorptionselement ist als Deformationselement ausgebildet, so dass sich die Fronthaube mit der Scharnieranordnung bei einem Anprall gezielt nach unten absenkt.

In der US 6 375 251 B1 wird vorgeschlagen, zwischen einem Außenblech und einem Innenblech eine Vielzahl von airbagähnlichen Kammern anzuordnen, die sich im Bereich des gesamten Kraftfahrzeugs befinden können, insbesondere auch zwischen einem Oberblech und einem Unterblech einer Fronthaube und auch im Bereich der Kotflügel.

Gegenstand der DE 199 57 869 A1 sind Deformationselemente, die unterhalb der Fronthaube angeordnet werden und bei einem Anprall aus einer undeformierten Normalstellung in eine deformierte Deformationsstellung überführbar sind. Hierbei kann es sich insbesondere um Stülpelemente oder faltbare Strukturen handeln, die bei einem Anprall gestaucht werden. Ein Haubenschloss kann auf den Deformationselementen abgestützt sein.

Eine Aufprall-Schutzvorrichtung für ein Kraftfahrzeug wird in der DE 199 48 181 A1 beschrieben. Die Aufprall-Schutzvorrichtung umfasst wenigstens einen Gassack, der im Fall einer Kollision des Kraftfahrzeugs mit einem Gegenstand und/oder mit einer Person mit einem Gas, das mit Hilfe eines Gasgenerators erzeugbar ist, so gefüllt werden kann, dass eine Scheibe oder ein Karosserieteil und/oder angrenzende Bereiche der Scheibe oder des Karosserieteils, insbesondere Kanten, wenigstens teilweise von dem Gassack bedeckt sind. Die Aufprall-Schutzvorrichtung ist hierbei wenigstens teilweise in einem Hohlraum angeordnet, beispielsweise in dem Spalt zwischen der Fronthaube und dem Kotflügel. Schließlich zählt es auch zum Stand der Technik, den oberen Bereich des Kotflügels insgesamt anprallweich zu gestalten. Ein solcher Ansatz ist Gegenstand der JP 2000 108840 A.

Hiervon ausgehend liegt der Erfindung die Aufgabe zugrunde, einen Personenkraftwagen mit nachgiebig gestalteten Karosseriefrontteilen aufzuzeigen, bei welchem die passive Sicherheit ungeschützter Verkehrsteilnehmer erhöht wird, ohne dass aktiv reagierende Stellglieder erforderlich sind und bei welchem insbesondere der Übergangsbereich zwischen der Fronthaube und den Kotflügeln kein erhöhtes Verletzungsrisiko darstellt.

Diese Aufgabe ist bei einem Personenkraftwagen mit den Merkmalen des Patentanspruchs 1 gelöst.

Als wesentliches Merkmal werden die zwischen der Fronthaube und den Kotflügeln eingegliederten Deformationselemente gesehen, wobei Deformationselemente im Sinne der Erfindung geeignet sind, eine gewisse Mindestmenge an Anprallenergie aufzunehmen. Deformationselemente im Sinne der Erfindung sind insbesondere nicht bei manchen Fahrzeugtypen zur Vermeidung eines reibenden metallischen Kontakts zwischen der Fronthaube und den Kotflügeln eingesetzten Schaumstoffmaterialien mit einer Dicke von nur wenigen mm. Die Deformationselemente im Sinne der Erfindung besitzen eine Dicke von wenigstens 5 mm, vorzugsweise von mehr als 10 mm. Die Deformationselemente erstrecken sich vorzugsweise entlang der gesamten Längskanten der Fronthauben.

Die Deformationselemente sind aus einem fluidgefüllten elastischen Dämpfungskissen gebildet. Das Dämpfungskissen besteht aus einem elastischen Werkstoff mit hoher Reissfestigkeit.

Die Fronthaube ist quer zur Fahrzeuglängsachse an diesen Dämpfungskissen gelagert. D.h. es werden von den Dämpfungskissen auch Kräfte aufgenommen, die nicht nur vertikal von oben auf diese wirken, sondern auch quer zur Fahrtrichtung angreifen. Letzteres kann beispielsweise bei gewölbten Fronthauben der Fall sein, die bei einem Aufprall abgeflacht werden und sich dadurch lateral ausdehnen. Diese lateral oder seitlich wirkenden Kräfte können durch entsprechend gestaltete Dämpfungskissen aufgefangen werden und zusätzlich zur Umwandlung der Anprallenergie beitragen.

Die Dämpfungskissen besitzen einen Horizontalschenkel und einen Vertikalschenkel. Die der Fronthaube zugewandten Anlageflächen des Dämpfungskissens sind stumpfwinklig zueinander angeordnet. Es hat sich gezeigt, dass diese Konfiguration besonders geeignet ist, Anprallkräfte der Motorhaube wirkungsvoll abzudämpfen, wobei durch die stumpfwinklige Anordnung der Schenkel eine vollflächige Anlage der Fronthaubenlängsseiten an den Anlageflächen des Dämpfungskissens möglich ist und darüber hinaus das Öffnen und Schließen der Fronthaube nicht durch die Gestaltung der Dämpfungskissen behindert wird.

Der erfindungsgemäße Personenkraftwagen weist eine Reihe von Merkmalen auf, die in ihrer Kombination wesentlich zur Reduzierung der Verletzungsschwere bei einem Anprall eines ungeschützten Verkehrsteilnehmers beitragen.

Die Deformationselemente können nicht erfindungsgemäss aus einem porösen Werkstoff bestehen. Dieser poröse Werkstoff kann bei einem Anprall irreversibel verformt werden, so dass die Deformationselemente nach einem Anprall ausgetauscht werden müssen. Selbstverständlich ist es auch möglich, reversible poröse Werkstoffe zu verwenden, die sich im wesentlichen elastisch verhalten. Diese porösen Werkstoffe sollten jedoch ein hohes E-Modul besitzen. Der Begriff E-Modul gilt normalerweise nur für den reversiblen Bereich. Er soll hier dennoch sinngemäß für den plastischen Bereich verwendet werden.

Gemäß Patentanspruch 1 sind Deformationskörper an der einem Antriebsaggregat zugewandten Unterseite der Fronthaube vorgesehen. Diese Deformationskörper dienen dazu, Aufprallenergie in Verformungsenergie umzuwandeln und auf diese Weise den begrenzten Freiraum zwischen der Fronthaube und dem Antriebsaggregat optimal zu nutzen. Die Deformationskörper können sich auf vordefinierten Auflagen der Karosserie und/oder des Antriebsaggregats abstützen. Die Deformationskörper bestehen vorzugsweise aus Metall und sind ähnlich wie Federbleche aus der tragenden Unterstruktur der Fronthaube in Richtung des Antriebsaggregats bzw. der Karosserie ausgestellt.

Das Dämpfungskissen kann sowohl mit einem gasförmigen oder auch flüssigen Stoff gefüllt sein. Vorzugsweise handelt es sich hierbei um Wasser und/oder Luft (Anspruch 2).

Um eine homogene Verteilung der Fluidfüllung zu erreichen, kann das Dämpfungskissen nach den Merkmalen des Patentanspruchs 3 in mehrere Kammern unterteilt sein. Hierdurch ist zudem sichergestellt, dass beim Bersten einer einzelnen Kammer nicht das gesamte Fluid austritt, sondern vielmehr der Dämpfungseffekt von den verbleibenden Kammern aufrecht erhalten wird.

Gemäß Patentanspruch 1 ist auch vorgesehen, dass die Fronthaube über ein an der Karosserie angeordnetes Haubenschloss verriegelbar ist, welches gegenüber von der Fronthaube ausgehenden Anprallkräften nachgiebig gestaltet und/oder gelagert ist.

In der Ausgestaltung des Patentanspruchs 4 ist vorgesehen, dass ein zwischen der Fronthaube und einem Kotflügel vorhandener Sichtspalt von den Dämpfungskissen ausgefüllt ist, wobei sich an der Fahrzeugaußenhaut zwischen der Fronthaube und dem Kotflügel ein fließender Übergang ergibt. Das Dämpfungskissen schließt bei dieser Konfiguration gewissermaßen den sichtbaren Spalt zwischen Fronthaube und Kotflügel vollständig.

Gemäß Patentanspruch 1 ist ebenfalls, die Fronthaube mit Scharniergelenken an der Karosserie gelagert, wobei die Scharniergelenke gegenüber von der Fronthaube ausgehenden Anprallkräften nachgiebig gestaltet und/oder gelagert ist.

Als weitere Maßnahme zur Erhöhung der passiven Sicherheit ungeschützter Verkehrsteilnehmer ist vorgesehen, dass das Haubenschloss auf einem Deformationssockel gelagert ist (Anspruch 5). Der Deformationssockel besitzt nach den Merkmalen des Patentanspruchs 6 einen im Querschnitt U-förmig konfigurierten Stützkörper mit zwei über einen Quersteg miteinander verbundenen Schenkeln. U-förmig bedeutet nicht, dass die Schenkel notwendigerweise im 90°-Winkel zum Quersteg angeordnet sind. Es ist auch denkbar, dass dieser zwischen Quersteg und Schenkel gemessene Winkel größer oder kleiner als 90° ist, so dass senkrecht zum Quersteg angreifende Kräfte eine Abwinklung der Schenkel gegenüber dem Quersteg bewirken, so dass die in Richtung der Schenkel gemessene Höhe der Stützkörper bei einem Anprall energieverzehrend verringert wird.

Nach den Merkmalen des Patentanspruchs 7 sind die Schenkel mit Aussparungen versehen, wobei zwischen den Aussparungen Stege verbleiben, die als Sollknickstellen konfiguriert sind. Die Aussparungen dienen zur Schwächung der Schenkel mit dem Ziel, dass die verbleibenden Stege bei Überschreiten einer bestimmten Kraft gezielt einknicken und damit unter Verrichtung von Vormungsarbeit ein Absenken der Fronthaube im Bereich des Haubenschlosses ermöglichen.

Gegenstand des Patentanspruchs 8 sind gegenüber den Schenkeln abgewinkelte Flansche. Die Flansche dienen als Auflagerflächen, auf denen das Haubenschloss angeordnet sein kann.

Gemäß Patentanspruch 9 sind die Stützkörper im Querschnitt trapezförmig konfiguriert, wobei die Trapezform sowohl durch aufeinander zugewandte Schenkel als auch durch voneinander abgewandte Stege realisiert sein kann, je nachdem, welches Verformungsverhalten des Deformationssockels bzw. des Stützkörpers gewünscht ist.

Im Rahmen des patentanspruchs 10 ist es vorgesehen, dass der Quersteg der Karosserie zugewandt ist, wobei das Haubenschloss auf den Flanschen abgestützt zwischen die Schenkel eines Stützkörpers oder Schenkel einander benachbarter Stützkörper greift. Bei dieser Anordnung wird der zwischen den Schenkeln vorhandene Bauraum zur Eingliederung mindestens eines Abschnitts des Haubenschlosses genutzt, so dass sich die Gesamtbauhöhe des Haubenschlosses nicht wesentlich durch die Stützkörper erhöht. Das Haubenschloss kann sowohl zwischen die Schenkel eines einzigen Stützkörpers oder auch zwischen die einander benachbarten Schenkel zweier im Abstand zueinander angeordneter Stützkörper greifen.

Selbstverständlich ist auch die umgekehrte Konfiguration möglich, nach der die Flansche an der Karosserie abgestützt sind und der Quersteg dem Haubenschloss zugewandt ist (Patentanspruch 11). Auch bei dieser Konfiguration kann ein Haubenschloss zwischen die Schenkel einander benachbarter Stützkörper greifen.

Die Stützkörper sind gemäß den Merkmalen des Patentanspruchs 12 vorzugsweise aus Metall gefertigt.

Zusätzlich zu den Deformationselementen zwischen der Fronthaube und den Kotflügeln können nach den Merkmalen des Patentanspruchs 13 an den Kotflügeln Deformationskonsolen vorgesehen sein. Die Deformationskonsolen sind andererseits an den Kotflügelbänken abgestützt. Bei einem Aufprall von oben wird eine in die Nähe der oberen Kotflügelkante angreifende Anprallkraft in die Deformationskonsolen eingeleitet. Diese sind nachgiebig konfiguriert, so dass sich die obere Kotflügelkante absenken kann und dadurch anprallweich verhält. Die Deformationskonsolen sind exakt auf das Nachgiebigkeitsverhalten der Fronthaube bzw. der Deformationselemente abgestimmt.

Wesentlich bei der Erfindung ist die Eingliederung von Deformationselementen zwischen der Fronthaube und den Kotflügeln. Die Kotflügel sind dabei an Kotflügelbänken gelagert. Durch die Deformationselemente ist es möglich, bei einem anprallbedingten Absenken der Motorhaube im Bereich der Fronthaubenlängsseiten zusätzlich Anprallenergie aufzunehmen und innerhalb der Deformationselemente in Verformungsenergie umzuwandeln. Ferner ist die Fronthaube über ein an der Karosserie angeordnetes Haubenschloss verriegelbar, welches gegenüber von der Fronthaube ausgehenden Anprallkräften nachgiebig gestaltet und/oder gelagert ist. Die nachgiebige Gestaltung des Haubenschlosses kann durch Sollbiegestellen innerhalb der Konstruktion des Haubenschlosses gegeben sein. Zusätzlich oder optional kann das Haubenschloss auf einem geeigneten Deformationssockel platziert sein, der ebenfalls derart konfiguriert ist, dass bei von der Fronthaube ausgehenden Anprallkräften einzelne Bereiche des Deformationssockels gezielt verformt werden und auf diese Weise beim Absenken der Motorhaube Energie umgewandelt wird.

Schließlich ist noch vorgesehen, dass die Scharniergelenke, mit denen die Fronthaube an der Karosserie gelagert ist, ebenfalls gegenüber von der Fronthaube ausgehenden Anprallkräften nachgiebig gestaltet und/oder gelagert sind. Hierbei können grundsätzlich die gleichen Deformationssockel zum Einsatz kommen wie bei dem Haubenschloss. Die Scharniergelenke können beispielsweise Sollbiegestellen oder Sollbruchstellen aufweisen, um eine gezielte Verformung zu erreichen.

Durch die erfindungsgemäße Kombination mehrerer Energie umwandelnder Konstruktionselemente im Bereich eines PKW-Vorderwagens kann bei gegenseitiger Abstimmung der einzelnen Maßnahmen die Verletzungsschwere bei einem Anprall eines ungeschützten Verkehrsteilnehmers signifikant reduziert werden, ohne dabei die Fahrzeugstruktur zu schwächen und ohne dass aktive Maßnahmen zur Erhöhung der passiven Sicherheit erforderlich sind.

Die Erfindung wird nachfolgend anhand eines in schematischen Zeichnungen dargestellten Ausführungsbeispiels näher erläutert. Es zeigen:
- Figur 1: nicht erfindungsgemäss einen Vertikalschnitt durch einen Kotflügel eines nicht näher dargestellten Kraftfahrzeugs im Übergangsbereich zur Fronthaube;
- Figur 2: das Ausführungsbeispiel der Erfindung und zwar den Übergangsbereich zwischen einem Kotflügel und einer Fronthaube im Vertikalschnitt;
- Figur 3: eine weitere Ausführungsform des Übergangsbereichs zwischen einer Fronthaube und einem Kotflügel ebenfalls im Vertikalschnitt;
- Figur 4: einen Vertikalschnitt durch ein unterhalb einer Fronthaube angeordnetes Haubenschloss in einer ersten Ausführungsform;
- Figur 5: eine zweite Ausführungsform eines Haubenschlosses in der Querschnittdarstellung;
- Figur 6: ein unterhalb einer Fronthaube angeordnetes Deformationselement und
- Figur 7: eine perspektivische Ansicht eines Teilbereichs eines Stützkörpers.

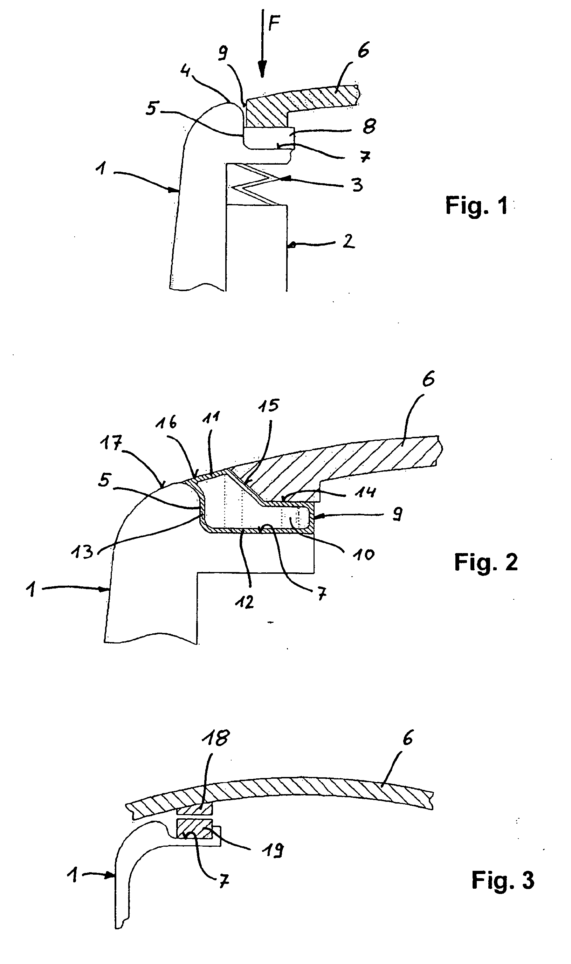

Figur 1 zeigt einen Kotflügel 1, der an einer Kotflügelbank 2 gelagert ist. Zwischen der Kotflügelbank 2 und dem Kotflügel 1 befindet sich eine schematisch angedeutete Deformationskonsole 3, welche bei von oben aus Richtung einer oberen Kotflügelkante 4 angreifenden Kräften F eine plastische Verformung erfährt. Von der oberen Kotflügelkante 4 erstreckt sich eine Stützwand 5 in Richtung zur Deformationskonsole 3 bzw. der Kotflügelbank 2. Die Stützwand 5 ist an ihrem unteren Ende in Richtung zu der mit 6 bezeichneten Fronthaube abgewinkelt. Der abgewinkelte Bereich bildet eine Auflagerleiste 7, auf welcher ein Deformationselement 8 angeordnet ist. Das Deformationselement 8 kann beispielsweise aus einem porösen Werkstoff bestehen und dient dazu, aus Richtung des Pfeils F angreifende Kräfte aufzunehmen. Die Fronthaube 6 wird dabei abgesenkt. Andererseits dient das Deformationselement 8 zur Weiterleitung der Kraft F in Richtung der Deformationskonsole 3 sowie der Kotflügelbank 2, die bei diesem mechanischen System gewissermaßen als Festlager fungiert.

In der Figur 2 ist das erfindungsgemässe Deformationselement 9 ein mit einem Fluid 10 gefülltes elastisches Dämpfungskissen 11. Das Dämpfungskissen 11 ist im wesentlichen L-förmig konfiguriert mit einem Horizontalschenkel 12 und einem an der Stützwand 5 des Kotflügels 1 anliegenden Vertikalschenkel 13. Während die dem Kotflügel 1 benachbarten Bereiche des Horizontalschenkels 12 und Vertikalschenkels 13 im wesentlichen senkrecht zueinander angeordnet sind, ist der zwischen den der Fronthaube 6 zugewandten Anlagefläche 14, 15 gemessene Winkel größer als 90°. D.h. die Anlagefläche 14, 15 sind stumpfwinklig zueinander angeordnet. Der Winkel kann zwischen 120° und 150° betragen.

Der Vertikalschenkel 13 erstreckt sich in den zwischen den Kotflügel 1 und der Fronthaube 6 vorhandenen Spalt und füllt diesen vollständig aus. Die bei geschlossener Fronthaube 1 sichtbare Außenfläche 16 des Vertikalschenkels 13 schließt bündig mit der Fahrzeugaußenhaut 17 des Kotflügels 1 sowie der Fronthaube 6 ab. Dadurch ergibt sich zwischen der Fronthaube 6 und dem Kotflügel 1 ein fließender Übergang.

Die Ausführungsform der Figur 3 zeigt eine Variante, bei welcher Deformationselemente 18 sowohl an der Fronthaube 6 vorgesehen sind als auch an der Auflagerleiste 7 des Kotflügels 1.

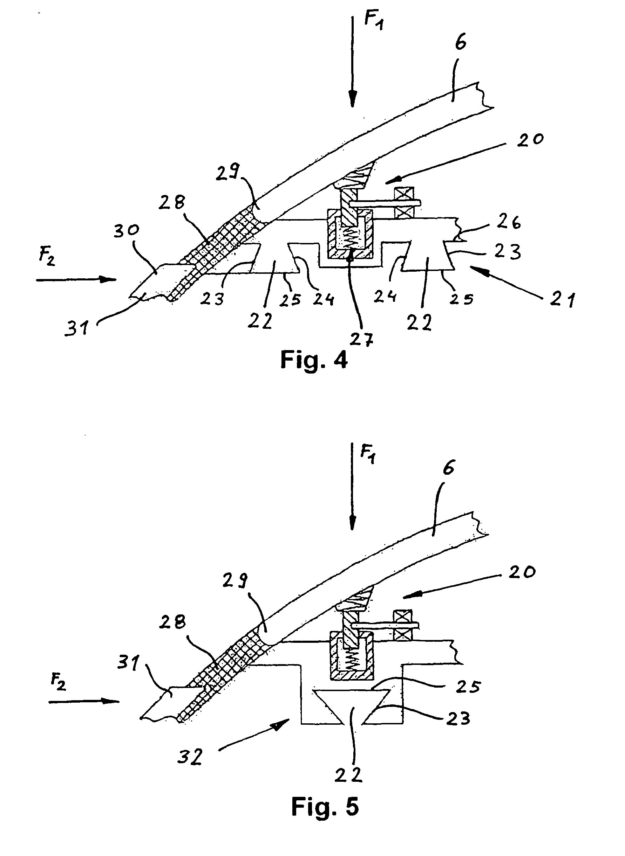

Figur 4 zeigt eine mögliche Ausgestaltung eines Haubenschlosses 20 unterhalb einer Fronthaube 6. Das Haubenschloss 20 ist auf einem Deformationssockel 21 gelagert, welcher zwei im Querschnitt trapezförmige Stützkörper 22 umfasst. Die Stützkörper 22 besitzen jeweils zwei Schenkel 23, 24, die über einen Quersteg 25 miteinander verbunden sind. Die Stützkörper 22 sind in Richtung zur Fronthaube 6 offen und besitzen an ihren offenen Enden gegenüber den Schenkeln 23, 24 abgewinkelte Flansche 26.

Bei dieser Ausführungsform greift das Haubenschloss 20 mit seinem unteren Ende zwischen die einander benachbart angeordneten Stützkörper 21. Das Haubenschloss 20 besitzt an seinem unteren Ende eine Federanordnung 27, die ein Absenken der Fronthaube 6 gegen eine aus der Federanordnung 27 resultierende Federkraft ermöglicht. Erst wenn die Federkraft der Federanordnung 27 überwunden ist, d.h. der elastische Bereich verlassen wird, kommt es zu einer Verformung des Deformationssockels 21. Die besondere Gestaltung des Deformationssockels 21 bzw. der Stützkörper 22 ermöglicht eine Ausweichbewegung des Haubenschlosses 20 und damit der Fronthaube 6 sowohl in Richtung des vertikalen Kraftvektors F1, d.h. bei von oben angreifenden Kräften, als auch in Richtung des horizontalen Kraftvektors F2, d.h. bei von vorne angreifenden Kollisionskräften.

Eine Sollbruchstelle 28 ist zwischen der vorderen Kante 29 der Fronthaube 6 und der Oberkante 30 eines schematisch angedeuteten Scheinwerfers 31 vorgesehen. Die Sollbruchstelle 28 kann beispielsweise aus einem elastischen Material bestehen, das insbesondere bei von oben angreifenden Kräften eine Verlagerung der Fronthaube 6 nach unten ermöglicht, ohne dabei zu einer Zerstörung des Scheinwerfers führen. Andererseits dient die Sollbruchstelle 28 dazu, den relativ unnachgiebigen Scheinwerfer 31 anprallweich gegenüber der Fronthaube 6 zu lagern, ohne dass der Scheinwerfer 31 bei einer Kollision zu schweren Verletzungen führt.

Die Ausführungsform der Figur 5 unterscheidet sich von derjenigen der Figur 2 dadurch, dass der dort verwendete Deformationssockel 32 nur einen Stützkörper 22 aufweist, der zudem in Richtung der nicht näher dargestellten Karosserie offen ist. D.h. der Stützkörper 22 ist gewissermaßen umgekehrt angeordnet, wobei sein Querschnitt 25 nunmehr dem Haubenschloss 20 zugewandt ist. Auch bei dieser Konfiguration ist ein Ausweichen des Haubenschlosses 20 und damit der Fronthaube 6 bei Anprallkräften aus den Richtungen der Kraftvektoren F1 und F2 möglich.

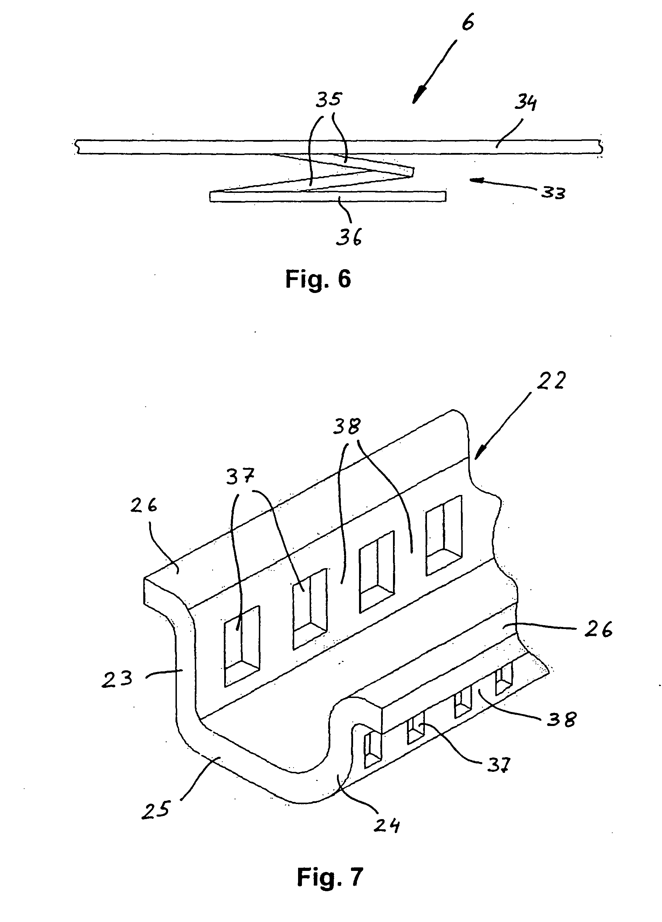

Figur 6 zeigt einen unterhalb einer andeutungsweise eingezeichneten Fronthaube 6 angeordneten Deformationskörper 33. Der Deformationskörper 33 ist aus der unterseitigen Tragstruktur 34 der Fronthaube 6 ausgestellt und weist in Richtung eines nicht näher dargestellten Antriebsaggregats. Der Deformationskörper 33 besteht ebenso wie die Tragstruktur 34 aus Metall. Er umfasst Federschenkel 35 und ein endseitig des unteren Federschenkels 35 angeordnetes Federblech 36, das bei diesem Ausführungsbeispiel parallel zur Tragstruktur 34 verläuft.

Figur 7 zeigt eine mögliche Ausführungsform eines Stützkörpers 22. Der Stützkörper 22 besitzt in seinen Schenkeln 23, 24 Aussparungen 37. Die Aussparungen 37 sind rechteckig konfiguriert und in gleichmäßigen Abständen zueinander angeordnet. Zwischen den Aussparungen 37 verbleiben Stege 38, die als Sollknickstellen konfiguriert sind und bei von oben und/oder von der Seite angreifenden Kräften eine Verformung der Schenkel 23, 24 ermöglichen.

### Bezugszeichenaufstellung:

- 1 -: Kotflügel
- 2 -: Kotflügelbank
- 3 -: Deformationskonsole
- 4 -: obere Kotflügelkante
- 5 -: Stützwand an 4
- 6 -: Fronthaube
- 7 -: Auflagerleiste v. 1
- 8 -: Deformationselement zw. 1 u. 6
- 9 -: Deformationselement zw. 1 u. 6
- 10-: Fluid in 11
- 11 -: Dämpfungskissen
- 12 -: Horizontalschenkel v. 11
- 13 -: Vertikalschenkel v. 11
- 14 -: Anlagefläche von 12
- 15 -: Anlagefläche von 13
- 16 -: Außenfläche von 13
- 17 -: Fahrzeugaußenhaut
- 18 -: Deformationselemente zw. 1 u. 6
- 19 -: Deformationselemente zw. 1 u. 6
- 20 -: Haubenschloss
- 21 -: Deformationssockel
- 22 -: Stützkörper v. 21
- 23 -: Schenkel von 22
- 24 -: Schenkel von 22
- 25 -: Quersteg v. 22
- 26 -: Flansch v. 22
- 27 -: Federanordnung v. 20
- 28 -: Sollbruchstelle
- 29 -: vordere Kante von 6
- 30 -: Oberkante von 31
- 31 -: Scheinwerfer
- 32 -: Deformationssockel
- 33 -: Deformationskörper
- 34 -: Tragstruktur v. 6
- 35 -: Federschenkel v. 33
- 36 -: Federblech v. 33
- 37 -: Aussparung in 23, 24
- 38 -: Stege zwischen 37

- F -: Kraftvektor
- F1 -: Kraftvektor
- F2 -: Kraftvektor

## Patentansprüche

1. Personenkraftwagen mit gegenüber von oben und/oder vorne durch einen Aufprall eines ungeschützten Verkehrsteilnehmers einwirkenden Kräften nachgiebig gestalteten Karosseriefrontteilen (1, 6) mit folgenden Merkmalen:
eine Fronthaube (6) weist an ihrer Unterseite einem Antriebsaggregat zugewandte Deformationskörper (33) auf;
die Fronthaube (6) ist unter Eingliederung von Deformationselementen an seitlichen Kotflügeln (1) abgestützt, welche an Kotflügelbänken (2) gelagert sind;
die Fronthaube (6) ist über ein an der Karosserie angeordnetes Haubenschloss (20) verriegelbar, welches gegenüber von der Fronthaube (6) ausgehenden Anprallkräften nachgiebig gestaltet und/oder gelagert ist;
die Fronthaube (6) ist mit Scharniergelenken an der Karosserie gelagert, wobei die Scharniergelenke gegenüber von der Fronthaube (6) ausgehenden Anprallkräften nachgiebig gestaltet und/oder gelagert sind;
die Deformationselemente (9) sind aus Fluid gefüllten elastischen Dämpfungskissen (11) gebildet;
die Fronthaube (6) ist quer zur Fahrzeuglängsachse an den Dämpfungskissen (11) gelagert;
die Dämpfungskissen (11) umfassen einen Horizontalschenkel (12) und einen Vertikalschenkel (13);
und die der Fronthaube (6) zugewandten Anlageflächen (14, 15) der Dämpfungskissen (11) sind stumpfwinklig zueinander angeordnet.

2. Personenkraftwagen nach Anspruch 1, **dadurch gekennzeichnet, dass** die Dämpfungskissen (11) mit Wasser und/oder Luft gefüllt sind.

3. Personenkraftwagen nach Anspruch 1 oder 2, **dadurch gekennzeichnet, dass** die Dämpfungskissen (11) in mehrere Kammern unterteilt sind.

4. Personenkraftwagen nach Anspruche 1, **dadurch gekennzeichnet, dass** ein zwischen der Fronthaube (6) und einem Kotflügel (1) vorhandener Sichtspalt von den Dämpfungskissen (11) ausgefüllt ist, wobei sich an der Fahrzeugaußenhaut (17) zwischen der Fronthaube (6) und dem Kotflügel (1) ein fließender Übergang ergibt.

5. Personenkraftwagen nach einem der Ansprüche 1 bis 4, **dadurch gekennzeichnet, dass** das Haubenschloss (20) auf einem Deformationssockel (21, 32) gelagert ist.

6. Personenkraftwagen nach Anspruch 5, **dadurch gekennzeichnet, dass** der Deformationssockel (21) einen im Querschnitt U-förmig konfigurierten Stützkörper (22) mit zwei über einen Quersteg (25) miteinander verbundenen Schenkeln (23, 24) aufweist.

7. Personenkraftwagen nach Anspruch 6, **dadurch gekennzeichnet, dass** die Schenkel (23, 24) mit Aussparungen (37) versehen sind, wobei zwischen den Aussparungen (37) verbleibende Stege (38) als Sollknickstellen konfiguriert sind.

8. Personenkraftwagen nach Anspruch 6 oder 7, **dadurch gekennzeichnet, dass** die Schenkel (23, 24) an ihren dem Quersteg (25) abgewandten Enden mit gegenüber den Schenkeln (23, 24) abgewinkelten Flanschen (26) versehen sind.

9. Personenkraftwagen nach einem der Ansprüche 6 bis 8, **dadurch gekennzeichnet, dass** die Stützkörper (22) im Querschnitt trapezförmig konfiguriert sind.

10. Personenkraftwagen nach Anspruch 8 oder 9 **dadurch gekennzeichnet, dass** der Quersteg (25) der Karosserie zugewandt und das Haubenschloss (20) auf den Flanschen (26) abgestützt zwischen die Schenkel (23, 24) eines Stützkörpers (22) oder die Schenkel (23, 24) einander benachbarter Stützkörper (22) greift.

11. Personenkraftwagen nach Anspruch 8 oder 9 **dadurch gekennzeichnet, dass** die Flansche (26) an der Karosserie abgestützt sind und der Quersteg (25) dem Haubenschloss (20) zugewandt ist.

12. Personenkraftwagen nach einem der Ansprüche 6 bis 11, **dadurch gekennzeichnet, dass** die Stützkörper (22) aus Metall gefertigt sind.

13. Personenkraftwagen nach einem der Ansprüche 1 bis 12, **dadurch gekennzeichnet, dass** die Kotflügel (1) über Deformationskonsolen (3) an den Kotflügelbänken (2) abgestützt sind.

## Claims

1. Motor vehicle with body front parts (1, 6) which are of flexible design with respect to forces acting from above and/or the front due to the impact of an unprotected road user, with the following features:
a front-opening lid (6) has, on its lower side, deformation bodies (33) facing a drive unit;
the front-opening lid (6) is supported, with deformation elements (9) incorporated, on lateral wings (1) which are mounted on wing supports (2); the front-opening lid (6) can be locked via a lid lock (20) which is arranged on the body and is of flexible design and/or is mounted flexibly with respect to impact forces emanating from the front-opening lid (6);
the front-opening lid (6) is mounted on the body by hinge joints, the hinge joints being of flexible design and/or being mounted flexibly with respect to impact forces emanating from the front-opening lid (6);
the deformation elements (9) are formed from fluid-filled, elastic damping cushions (11);
the front-opening lid (6) is mounted transversely with respect to the longitudinal axis of the vehicle on the damping cushions (11);
the damping cushions (11) comprise a horizontal limb (12) and a vertical limb (13) ;
and the bearing surfaces (14, 15) of the damping cushions (11), which bearing surfaces face the front-opening lid (6), are arranged at an obtuse angle with respect to each other.

2. Motor vehicle according to Claim 1, **characterized in that** the damping cushions (11) are filled with water and/or air.

3. Motor vehicle according to Claim 1 or 2, **characterized in that** the damping cushions (11) are divided into a plurality of chambers.

4. Motor vehicle according to Claim 1, **characterized in that** a visible gap present between the front-opening lid (6) and a wing (1) is filled by the damping cushions (11), with a progressive transition between the front-opening lid (6) and the wing (1) arising at the vehicle outer skin (17).

5. Motor vehicle according to one of Claims 1 to 4, **characterized in that** the lid lock (20) is mounted on a deformation understructure (21, 32).

6. Motor vehicle according to Claim 5, **characterized in that** the deformation understructure (21) is a supporting body (22) which is configured in a U-shaped manner in cross section and has two limbs (23, 24) connected to each other via a transverse web (25).

7. Motor vehicle according to Claim 6, **characterized in that** the limbs (23, 24) are provided with recesses (37), with webs (38) remaining between the recesses (37) being configured as predetermined buckling points.

8. Motor vehicle according to Claim 6 or 7, **characterized in that** the limbs (23, 24) are provided at their ends facing away from the transverse web (25) with flanges (26) which are angled with respect to the limbs (23, 24).

9. Motor vehicle according to one of Claims 6 to 8, **characterized in that** the supporting bodies (22) are configured trapezoidally in cross section.

10. Motor vehicle according to Claim 8 or 9, **characterized in that** the transverse web (25) faces the body, and the lid lock (20), supported on the flanges (26), reaches between the limbs (23, 24) of a supporting body (22) or the limbs (23, 24) of mutually adjacent supporting bodies (22).

11. Motor vehicle according to Claim 8 or 9, **characterized in that** the flanges (26) are supported on the body and the transverse web (25) faces the lid lock (20).

12. Motor vehicle according to one of Claims 6 to 11, **characterized in that** the supporting bodies (22) are manufactured from metal.

13. Motor vehicle according to one of Claims 1 to 12, **characterized in that** the wings (1) are supported on the wing supports (2) via deformation brackets (3).

## Revendications

1. Véhicule automobile de tourisme muni de parties frontales (1, 6) de carrosserie conçues pour céder sous l'action de forces agissant par en haut et/ou depuis l'avant, suite à un impact d'un usager du trafic dénué de protection, offrant les caractéristiques suivantes :
un capot avant (6) comporte, à sa face inférieure, des corps de déformation (33) tournés vers un groupe d'entraînement ;
ledit capot avant (6) prend appui, avec intégration d'éléments de déformation (8), sur des ailes latérales (1) montées sur des consoles (2) ;
ledit capot avant (6) peut être verrouillé par l'intermédiaire d'une serrure (20) qui est disposée sur la carrosserie, et est conçue et/ou montée de manière à céder à des forces d'impacts provenant dudit capot avant (6) ;
ledit capot avant (6) est monté sur la carrosserie par des articulations à charnières, lesdites articulations à charnières étant conçues et/ou montées de manière à céder à des forces d'impacts provenant dudit capot avant (6) ;
les éléments de déformation (9) sont matérialisés par des coussins amortisseurs élastiques (11) emplis d'un fluide ;
le capot avant (6) est monté transversalement par rapport à l'axe longitudinal du véhicule, sur lesdits coussins amortisseurs (11) ;
lesdits coussins amortisseurs (11) comprennent une branche horizontale (12) et une branche verticale (13) ;
et les surfaces de contact (14, 15) desdits coussins amortisseurs (11), qui sont tournées vers le capot avant (6), sont mutuellement agencées à angle obtus.

2. Véhicule automobile selon la revendication 1, **caractérisé par le fait que** les coussins amortisseurs (11) sont emplis d'eau et/ou d'air.

3. Véhicule automobile selon la revendication 1 ou 2, **caractérisé par le fait que** les coussins amortisseurs (11) sont scindés en plusieurs compartiments.

4. Véhicule automobile selon la revendication 1, **caractérisé par le fait qu'**un interstice de visite, présent entre le capot avant (6) et une aile (1), est comblé par les coussins amortisseurs (11), d'où résulte une transition continue entre ledit capot avant (6) et ladite aile (1) sur l'enveloppe extérieure (17) du véhicule.

5. Véhicule automobile selon l'une des revendications 1 à 4, **caractérisé par le fait que** la serrure (20) du capot est montée sur une embase de déformation (21,32).

6. Véhicule automobile selon la revendication 5, **caractérisé par le fait que** l'embase de déformation (21) présente un corps d'appui (22) de section transversale configurée en U, avec deux branches (23, 24) reliées l'une à l'autre par l'intermédiaire d'une nervure transversale (25).

7. Véhicule automobile selon la revendication 6, **caractérisé par le fait que** les branches (23, 24) sont munies d'évidements (37), des membrures (38), subsistant entre lesdits évidements (37), étant configurées comme des zones de flexion par destination.

8. Véhicule automobile selon la revendication 6 ou 7, **caractérisé par le fait que** les branches (23, 24) sont dotées, à leurs extrémités tournées à l'opposé de la nervure transversale (25), de brides (26) coudées par rapport auxdites branches (23, 24).

9. Véhicule automobile selon l'une des revendications 6 à 8, **caractérisé par le fait que** les corps d'appui (22) sont de configuration trapézoïdale en coupe transversale.

10. Véhicule automobile selon la revendication 8 ou 9, **caractérisé par le fait que** la nervure transversale (25), tournée vers la carrosserie, et la serrure (20) du capot, en appui sur les brides (26), pénètrent entre les branches (23, 24) d'un corps d'appui (22) ou les branches (23, 24) de corps d'appui (22) mutuellement voisins.

11. Véhicule automobile selon la revendication 8 ou 9, **caractérisé par le fait que** les brides (26) sont en appui sur la carrosserie, et la nervure transversale (25) est tournée vers la serrure (20) du capot.

12. Véhicule automobile selon l'une des revendications 6 à 11, **caractérisé par le fait que** les corps d'appui (22) sont fabriqués en métal.

13. Véhicule automobile selon l'une des revendications 1 à 12, **caractérisé par le fait que** les ailes (1) prennent appui sur les consoles (2) par l'intermédiaire de supports de déformation en porte-à-faux (3).
